(19) Europäisches Patentamt
European Patent Office
Office européen des brevets

(11) EP 4 079 158 A1

# (12) EUROPEAN PATENT APPLICATION
published in accordance with Art. 153(4) EPC

(43) Date of publication:
**26.10.2022 Bulletin 2022/43**

(21) Application number: **20903492.5**

(22) Date of filing: **17.12.2020**

(51) International Patent Classification (IPC):
***A01N 43/60*** *(2006.01)* ***A01P 3/00*** *(2006.01)*

(52) Cooperative Patent Classification (CPC):
**A01N 43/60**

(86) International application number:
**PCT/JP2020/047167**

(87) International publication number:
**WO 2021/125272 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2019 JP 2019229588**

(71) Applicant: **KANEKA CORPORATION**
**Osaka-shi, Osaka 530-8288 (JP)**

(72) Inventors:
- **MORI, Arianna**
  **Tokyo 104-0052 (JP)**
- **URATA, Naohide**
  **Tokyo 104-0052 (JP)**
- **SUZUKI, Shunji**
  **Kofu-shi, Yamanashi 400-8510 (JP)**
- **AOKI, Yoshinao**
  **Kofu-shi, Yamanashi 400-8510 (JP)**
- **NOJIRI, Masutoshi**
  **Osaka-shi, Osaka 530-8288 (JP)**

(74) Representative: **Hoffmann Eitle**
**Patent- und Rechtsanwälte PartmbB**
**Arabellastraße 30**
**81925 München (DE)**

## (54) PLANT DISEASE CONTROL AGENT, AND PLANT CULTIVATION METHOD

(57) One or more embodiments of the present invention provide a control agent for a plant disease caused by infection with *Oomycetes,* such as downy mildew or Phytophthora disease. One or more embodiments of the present invention relate to a control agent for a plant disease caused by infection with a microbe belonging to *Oomycetes*, comprising one or more selected from cyclo(L-leucyl-L-phenylalanyl) and a salt thereof as an active ingredient. The present invention also relates to a control agent for grapevine downy mildew, comprising one or more selected from cyclo(L-prolyl-L-valyl) and a salt thereof as an active ingredient.

Fig. 1

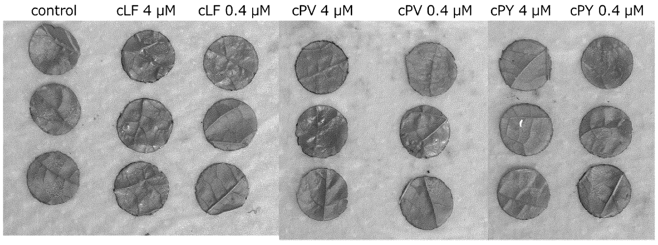


EP 4 079 158 A1

## Description

Technical Field

The present invention relates to a control agent for a plant disease caused by infection with a microbe belonging to *Oomycetes,* comprising a cyclic dipeptide as an active ingredient.

The present invention also relates to a plant cultivation method comprising applying a cyclic dipeptide to a plant.

Background Art

Various microbes such as *Oomycetes,* viruses, bacteria, and fungi are known to infect plants, causing plant diseases. Among them, *Oomycetes* microbes are known to infect various plants such as vegetables, fruit trees, and flowering plants, causing plant diseases such as downy mildew, Phytophthora disease, and Pythium disease, which in turn bring about serious damage.

Grapevine downy mildew is a disease resulting from the infection of grapevine with *Plasmopara viticola.* A copper agent called Bordeaux mixture is known as a traditional control agent for grapevine downy mildew. However, a problem of the Bordeaux mixture is the accumulation of copper in soil.

Control agents containing a microbe itself or a component producible by the microbe as an active ingredient have been developed as highly environmentally safe control agents for plant diseases caused by *Oomycetes.*

Patent Literature 1 states that a form having a particular structure among 2,5-diketopiperazine derivatives (cyclic dipeptides) in which two molecules of amino acids are cyclically bound has a control effect on soft rot, damping-off, Phytophthora disease, fusarium wilt, leaf spot, mosaic disease, and the like in plants. Patent Literature 2 discloses 80 kinds of compounds as specific examples of 2,5-diketopiperazine derivatives (cyclic dipeptides).

Patent Literature 3 discloses that cyclic peptide compounds produced by predetermined bacteria of the genus *Bacillus* are effective as fungicides.

Patent Literature 4 discloses that cyclo(L-Phe-trans-4-hydroxy-L-Pro), cyclo(L-Leu-trans-4-hydroxy-L-Pro) and cyclo(L-Ala-trans-4-hydroxy-L-Pro) which are cyclic dipeptides produced by *Alternaria alternata*, a kind of a fungus, is effective for the control of a grapevine downy mildew fungus *Plasmopara viticola.*

Non Patent Literature 1 discloses that cyclo(L-Pro-L-Val), cyclo(L-Pro-L-Phe) and cyclo(L-Pro-L-Tyr) which are cyclic dipeptides produced by *Pseudomonas aeruginosa* have auxin-like activity.

Non Patent Literature 2 discloses that cyclo(L-Pro-L-Val), cyclo(L-Pro-L-Tyr) and cyclo(L-Pro-L-Phe) which are cyclic dipeptides produced by marine bacteria of the genus *Bacillus* have a control effect on *Aspergillus niger.*

Non Patent Literature 3 discloses that cyclo(L-Pro-L-Leu), cyclo(D-Pro-L-Leu) and cyclo(D-Pro-L-Tyr) which are cyclic dipeptides produced by bacteria of the genus *Bacillus* have a control effect on *Aspergillus flavus.*

Non Patent Literature 4 discloses that cyclo(L-Pro-L-Tyr) which is a cyclic dipeptide produced by a *Bacillus* KN07 strain has a control effect on *E. coli* and the like.

Non Patent Literatures 5 and 6 disclose that cyclo(L-Pro-L-Tyr) which is a cyclic dipeptide produced by a *Lysobacter capsici* AZ78 strain has a control effect on a downy mildew fungus *Plasmopara viticola* in grapevine and a Phytophthora fungus *Phytophthora infestans* in potato and the like.

Non Patent Literature 7 discloses that cyclo(Ala-Val), cyclo(Pro-Val), cyclo(Pro-Leu) and cyclo(Pro-Phe) which are cyclic dipeptides produced by a *Bacillus amyloliquefaciens* Q-426 strain have a control effect on *Candida albicans.*

Citation List

Patent Literature

Patent Literature 1: JP Patent Publication (Kokai) No. 2005-289943 A (2005)
Patent Literature 2: JP Patent Publication (Kohyo) No. 2013-531688 A (2013)
Patent Literature 3: JP Patent Publication (Kokai) No. 5-51397 A (1993)
Patent Literature 4: International Publication No. WO2008/007251

Non Patent Literature

Non Patent Literature 1: PNAS 108, (17), 7253-7258 (2011)
Non Patent Literature 2: Chem. Pharm. Bull. 59, (1), 106-108 (2011)
Non Patent Literature 3: Journal of Applied Microbiology 113, 914-924 (2012)
Non Patent Literature 4: Biosci. Biotechnol. Biochem., 77, (7), 1449-1454 (2013)
Non Patent Literature 5: Chemistry of Heterocyclic compounds., 50, (2), 290-295 (2014)
Non Patent Literature 6: Journal of Applied Microbiology 117, 1168-1180 (2014)
Non Patent Literature 7: Annals of Biological Sciences 5, (1), 47-53 (2017)

## Summary of Invention

### Technical Problem

As described above, techniques of controlling plant diseases using microbes themselves or microbe-derived components such as cyclic dipeptides have heretofore been developed. However, any control agent for a plant disease caused by infection with *Oomycetes,* which can sufficiently meet market demand, has not yet been provided.
Accordingly, an object of one or more embodiments of the present invention is to provide a control agent for a plant disease caused by infection with *Oomycetes,* such downy mildew or Phytophthora disease.

### Solution to Problem

The present invention encompasses the following aspects.

(1) A control agent for a plant disease caused by infection with a microbe belonging to *Oomycetes,* comprising one or more selected from cyclo(L-leucyl-L-phenylalanyl) and a salt thereof as an active ingredient.
(2) The plant disease control agent according to (1), wherein the plant disease is downy mildew or Phytophthora disease.
(3) The plant disease control agent according to (2), wherein the plant disease is grapevine downy mildew.
(4) The plant disease control agent according to any one of (1) to (3), wherein the microbe is *Plasmopara viticola* or *Phytophthora infestans.*
(5) A control agent for grapevine downy mildew, comprising one or more selected from cyclo(L-prolyl-L-valyl) and a salt thereof as an active ingredient.
(6) A method for controlling a plant disease caused by infection with a microbe belonging to *Oomycetes,* comprising applying one or more selected from cyclo(L-leucyl-L-phenylalanyl) and a salt thereof to a plant.
(7) A method for controlling grapevine downy mildew, comprising
applying one or more selected from cyclo(L-prolyl-L-valyl) and a salt thereof to grapevine.
(8) A plant cultivation method comprising:

applying one or more selected from cyclo(L-leucyl-L-phenylalanyl) and a salt thereof to a plant; and
glowing the plant after the application.

(9) A grapevine cultivation method comprising:

applying one or more selected from cyclo(L-prolyl-L-valyl) and a salt thereof to grapevine; and
glowing the grapevine after the application.

(10) Use of one or more selected from cyclo(L-leucyl-L-phenylalanyl) and a salt thereof for controlling a plant disease caused by infection with a microbe belonging to *Oomycetes* in a plant.
(11) The use according to (10), wherein the plant disease is downy mildew or Phytophthora disease.
(12) The use according to (11), wherein the plant disease is grapevine downy mildew.
(13) The use according to any one of (10) to (12), wherein the microbe is *Plasmopara viticola* or *Phytophthora infestans.*
(14) Use of one or more selected from cyclo(L-prolyl-L-valyl) and a salt thereof for controlling grapevine downy mildew in grapevine.

The present specification encompasses the contents disclosed in Japanese Patent Application No. 2019-229588 on which the priority of the present application is based.

Advantageous Effects of Invention

One or more selected from cyclo(L-leucyl-L-phenylalanyl) and a salt thereof have high activity of controlling a plant disease caused by infection with a microbe belonging to *Oomycetes.*
One or more selected from cyclo(L-prolyl-L-valyl) and a salt thereof have high activity of controlling grapevine downy mildew.

Brief Description of Drawing

[Figure 1] Figure 1 shows photographs of leaf discs on 10 days after inoculation of a downy mildew fungus spore suspension free from a cyclic dipeptide (control), and a downy mildew fungus spore suspension containing a cyclic dipeptide at a concentration of 4 μM or 0.4 μM in Example 1.

Description of Embodiments

<Active ingredient>

Cyclo(L-leucyl-L-phenylalanyl) is a kind of cyclic dipeptide represented by the following formula:

[Formula 1]

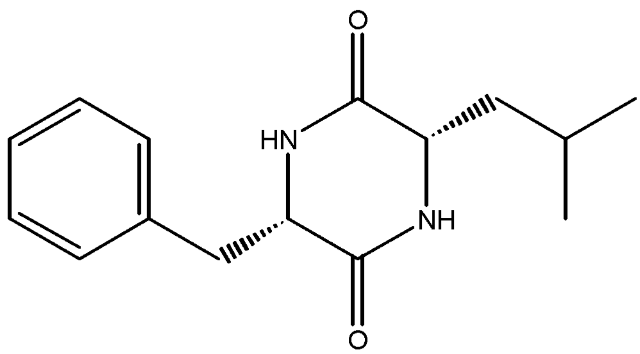

Cyclo(L-leucyl-L-phenylalanyl) can also be referred to as cyclo(L-Leu-L-Phe) or cLF.
Cyclo(L-prolyl-L-valyl) is a kind of cyclic dipeptide represented by the following formula:

[Formula 2]

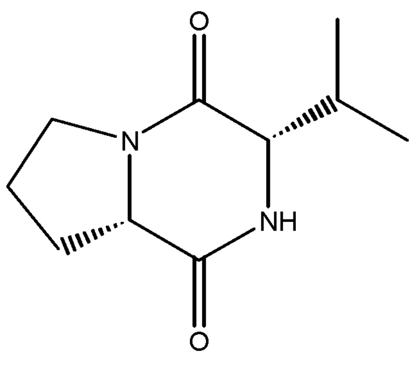

Cyclo(L-prolyl-L-valyl) can also be referred to as cyclo(L-Pro-L-Val) or cPV.
In one or more embodiments of the present invention, the salt of cyclo(L-leucyl-L-phenylalanyl) or cyclo(L-prolyl-L-valyl) is not particularly limited as long as the salt is acceptable for agricultural purposes.
Each of one or more active ingredients selected from one or more selected from cyclo(L-leucyl-L-phenylalanyl) and a salt thereof, and one or more selected from cyclo(L-prolyl-L-valyl) and a salt thereof (hereinafter, referred to as an "active ingredient") for use in one or more embodiments of the present invention may be chemically synthesized or

may be derived from a natural product such as a microbe or a plant. Each active ingredient may be a synthetic product having high purity or a purified product from a natural product, and may be in a form such as a microbe itself, a homogenate of the microbe, an extract of the microbe, a partially purified product of the extract of the microbe, a plant itself, a homogenate of the plant, an extract of the plant, a partially purified product of the extract of the plant, or the like containing the active ingredient. The microbe or the plant containing the active ingredient may be a microbe or a plant originally having the ability to produce the active ingredient, or may be a microbe or a plant provided with the ability to produce the active ingredient by an approach such as a gene recombination technique.

<Composition comprising active ingredient>

The active ingredient may be applied as a composition comprising one or more of the active ingredients described above in combination with an additional component to a plant.

Examples of the additional component include other useful components beneficial to plants, and components necessary for formulation. Examples of other useful components beneficial to plants include other cyclic peptides and fertilizer components. Examples of the components necessary for formulation include carriers, liquid vehicles, spreading agents, surfactants, thickeners, and antioxidants.

The form of the composition comprising the active ingredient may be a liquid composition or may be a solid composition.

A method for producing the composition comprising one or more of the active ingredients described above is not particularly limited, and the composition can be produced by mixing components by an appropriate approach. The solid composition can be produced, if necessary, by operations such as pulverization, granulation, and drying, and the liquid composition can be produced, if necessary, by operations such as stirring and dispersion.

The composition comprising one or more of the active ingredients described above can be a composition suitable for application to the aboveground part, such as a leaf, a stem, a fruit, or a flower, or the rhizosphere of the target plant, and is preferably a composition suitable for application to the aboveground part, more preferably a composition in a form suitable for application to the leaf of the target plant. The composition suitable for application to the leaf of the target plant, comprising one or more of the active ingredients described above can be in an arbitrary form such as: a liquid composition that can be misted or spread directly to the leaf surface of the target plant; a liquid composition that is diluted with a solvent such as water, a water-soluble solvent (methanol, ethanol, etc.), or a mixed solvent of two or more thereof and then applied; a solid composition (e.g., a powder and granules) that is dissolved or dispersed in a solvent such as water, a water-soluble solvent (methanol, ethanol, etc.), or a mixed solvent of two or more thereof and then applied; a solid composition (e.g., a powder (dust)) that is sprayed directly to the leaf surface of the target plant; or a solid composition (e.g., a powder (dust)) that is diluted with a solid material such as clay, talc, or soil and then applied. The form of a solid composition is preferred in consideration of preservation stability.

The content of cyclo(L-leucyl-L-phenylalanyl) and a salt thereof in the composition comprising one or more selected from cyclo(L-leucyl-L-phenylalanyl) and a salt thereof to be applied to the plant is not particularly limited, and the total amount of cyclo(L-leucyl-L-phenylalanyl) and a salt thereof based on the total amount of the composition is usually preferably 0.00001% by weight or more, 0.0001% by weight or more, 0.001% by weight or more, 0.002% by weight or more, 0.01% by weight or more, or 0.05% by weight or more in terms of the lower limit, and preferably 99% by weight or less or 50% by weight or less in terms of the upper limit.

The content of cyclo(L-leucyl-L-phenylalanyl) and a salt thereof in the composition comprising one or more selected from cyclo(L-leucyl-L-phenylalanyl) and a salt thereof to be applied to the plant is not particularly limited, and the total amount of cyclo(L-leucyl-L-phenylalanyl) and a salt thereof based on the total amount of the composition is preferably 0.1 μM or more, 0.4 μM or more, 1 μM or more, 4 μM or more, or 40 μM or more in terms of the lower limit, and preferably 400 mM or less or 40 mM or less in terms of the upper limit.

The content of cyclo(L-prolyl-L-valyl) and a salt thereof in the composition comprising one or more selected from cyclo(L-prolyl-L-valyl) and a salt thereof to be applied to the plant is not particularly limited, and the total amount of cyclo(L-prolyl-L-valyl) and a salt thereof based on the total amount of the composition is usually preferably 0.000001% by weight or more, 0.00001% by weight or more, 0.0001% by weight or more, 0.001% by weight or more, 0.002% by weight or more, 0.01% by weight or more, or 0.005% by weight or more in terms of the lower limit, and preferably 99% by weight or less or 50% by weight or less in terms of the upper limit.

The content of cyclo(L-prolyl-L-valyl) and a salt thereof in the composition comprising one or more selected from cyclo(L-prolyl-L-valyl) and a salt thereof to be applied to the plant is not particularly limited, and the total amount of cyclo(L-prolyl-L-valyl) and a salt thereof based on the total amount of the composition is preferably 0.1 μM or more, 0.4 μM or more, 1 μM or more, 4 μM or more, or 10 μM or more, or 100 μM or more in terms of the lower limit, and preferably 400 mM or less or 40 mM or less in terms of the upper limit.

<Plant disease>

One embodiment of the present invention relates to a control agent for a plant disease caused by infection with a microbe belonging to *Oomycetes,* comprising one or more selected from cyclo(L-leucyl-L-phenylalanyl) and a salt thereof as an active ingredient.

In this context, examples of the microbe belonging to *Oomycetes* include downy mildew fungi and Phytophthora fungi.

Specific combinations of the downy mildew fungi or the Phytophthora fungi and target plants infected therewith will be listed below.

(Target plant of downy mildew and causative downy mildew fungus)

(Vegetable)

*Pseudoperonospora cubensis* which causes downy mildew in cucumber, melon, watermelon, and squash, *Peronospora brassicae* which causes downy mildew in daikon radish, Chinese cabbage, cabbage, and turnip, *Peronospora destructor* which causes downy mildew in onion and leek, *Peronospora spinaciae* which causes downy mildew in spinach, *Peronospora chrisanthemi-coronarii* which causes downy mildew in chop-suey greens, *Bremia lactucae* which causes downy mildew in lettuce, and *Plasmopara nivea* which causes downy mildew in plants of the family *Apiaceae.*

(Fruit tree)

*Plasmopara viticola* which causes downy mildew in grapevine.

(Pulse and special crop)

*Peronospora pisi* which causes downy mildew in pea, *Peronospora viciae* which causes downy mildew in broad bean, *Peronospora schachtii* which causes downy mildew in sugar beet, *Peronospora brassicae* which causes downy mildew in rape, *Pseudoperonospora humuli* which causes downy mildew in hop, and *Peronospora tabacina* which causes downy mildew in tobacco.

(Flowering plant)

*Peronospora sparsa* which causes downy mildew in rose, and *Peronospora danica* which causes downy mildew in chrysanthemum.

(Target plant of Phytophthora disease and causative Phytophthora fungus)

*Phytophthora infestans* which causes in Phytophthora disease in tomato and potato, *Phytophthora capsici* which is responsible for gray Phytophthora rot in tomato and cucumber and causes Phytophthora disease in capsicum, bell pepper, and squash, *Phytophthora nicotianae* var. *parasitica* which causes in Phytophthora disease in melon, cucumber, strawberry, sesame, carnation, gerbera, and lilies, *Phytophthora megasperma var. sojae* which causes Phytophthora stem rot in soybean, *Phytophthora vignae* which causes Phytophthora stem rot in adzuki bean, *Phytophthora nicotianae* var. *nicotianae* which causes Phytophthora disease in broad bean, onion, and leek, *Phytophthora cactorum* which causes Phytophthora disease in chrysanthemum and tulip, *Phytophthora drechsleri* which causes Phytophthora disease in watermelon, *Phytophthora melonis* which causes Phytophthora disease in cucumber, and *Phytophthora* sp. which causes Phytophthora disease in spinach.

The control agent comprising one or more selected from cyclo(L-leucyl-L-phenylalanyl) and a salt thereof as an active ingredient is particularly suitable for the control of, particularly preferably, downy mildew caused by infection with *Plasmopara viticola* in grapevine, and Phytophthora disease caused by infection with *Phytophthora infestans* in tomato or potato.

Examples of the variety of the target grapevine can include, but are not particularly limited to, cabernet sauvignon, merlot, Tempranillo, pinot noir, Syrah, Muscat Bailey A, Kyoho, Pione, Delaware, clone 21, Crimson Seedless, Flame Seedless, and Red Globe.

Another embodiment of the present invention relates to a control agent for grapevine downy mildew, comprising one or more selected from cyclo(L-prolyl-L-valyl) and a salt thereof as an active ingredient. The control agent according to this embodiment is suitable for the control of downy mildew caused by infection with *Plasmopara viticola* in grapevine.

<Method for controlling plant disease and plant cultivation method>

A further alternative embodiment of the present invention relates to a method for controlling a plant disease caused by infection with a microbe belonging to *Oomycetes,* comprising
applying one or more selected from cyclo(L-leucyl-L-phenylalanyl) and a salt thereof to a plant.
A further alternative embodiment of the present invention relates to a plant cultivation method comprising:

applying one or more selected from cyclo(L-leucyl-L-phenylalanyl) and a salt thereof to a plant; and
glowing the plant after the application.

The plant to undergo application is a plant for which the control of any of the plant diseases described above is desired, and is preferably any of the plants described above.
The one or more selected from cyclo(L-leucyl-L-phenylalanyl) and a salt thereof may be applied in the form of a composition comprising the members to the plant.
The application of the components to the target plant may be application to the aboveground part, such as a leaf, a stem, a fruit, or a flower, of the target plant, may be application to rhizosphere, or may be a combination thereof.
The amount of the one or more selected from cyclo(L-leucyl-L-phenylalanyl) and a salt thereof, applied to the plant can be appropriately adjusted according to the type of the plant or a conventional amount of a spray solution at the time of control. Examples of the amount of the members applied once can usually include 0.5 g/ha to 2000 g/ha, preferably 10 g/ha to 500 g/ha.
The number of times of application of the one or more selected from cyclo(L-leucyl-L-phenylalanyl) and a salt thereof to grapevine may be one or two or more and is preferably two or more, for example, 2 to 10, particularly, 3 to 5.
The step of glowing the plant after the application can be performed by a usual growth method such as growth in soil.
A further alternative embodiment of the present invention relates to a method for controlling grapevine downy mildew, comprising
applying one or more selected from cyclo(L-prolyl-L-valyl) and a salt thereof to grapevine.
A further alternative embodiment of the present invention relates to a grapevine cultivation method comprising:

applying one or more selected from cyclo(L-prolyl-L-valyl) and a salt thereof to grapevine; and
glowing the grapevine after the application.

The one or more selected from cyclo(L-prolyl-L-valyl) and a salt thereof may be applied in the form of a composition comprising the same to grapevine.
The application of the components to the target grapevine may be application to the aboveground part, such as a leaf, a stem, a fruit, or a flower, of the grapevine, may be application to rhizosphere, or may be a combination thereof. Application to the aboveground part is preferred, and application to a leaf is particularly preferred.
The amount of the one or more selected from cyclo(L-prolyl-L-valyl) and a salt thereof, applied to grapevine can be appropriately adjusted according to the type of the plant or a conventional amount of a spray solution at the time of control and is not particularly limited. Examples of the amount of the members applied once can include 1 g/ha to 4000 g/ha, preferably 10 g/ha to 1000 g/ha.
The number of times of application of the one or more selected from cyclo(L-prolyl-L-valyl) and a salt thereof to grapevine may be one or two or more and is preferably two or more, for example, 2 to 10, particularly, 3 to 5.
The step of glowing the grapevine after the application can be performed by a usual growth method such as growth in soil.

Examples

In the experiments of Examples and Comparative Examples given below, cyclic dipeptides are abbreviated as follows.

Cyclo(L-leucyl-L-phenylalanyl): cLF
Cyclo(L-prolyl-L-valyl): cPV
Cyclo(L-prolyl-L-tyrosyl): cPY

<Example 1: Leaf disc test>

The leaves of grapevine (variety: Koshu) were collected between the 4th to 7th leaves from the shoot apex.

The collected leaves were hollowed out using a cork borer having a diameter of 1.5 cm to prepare leaf discs. The prepared leaf discs were arranged with their backsides turned up in Petri dishes lined with wet paper towels. The spores of a grapevine downy mildew fungus *Plasmopara viticola* (subcultures of a strain separated from the grapevine farm field of the University of Yamanashi) cultured beforehand were gathered using an ink brush, and a spore suspension was prepared. The spore suspension was adjusted to $5 \times 10^3$ spores/ml in a counting chamber. Each cyclic dipeptide (cLF, cPV, or cPY) solution prepared at 10 times its final concentration (4 μM, 0.4 μM, or 0 μM) was diluted with the spore suspension to adjust the concentration of the cyclic dipeptide to the final concentration (4 μM, 0.4 μM, or 0 μM).

The prepared spore suspension containing the cyclic dipeptide at each of the concentrations described above was inoculated to four locations (10 μl each) (the number of spores: approximately 50 spores/location) in each leaf disc. The inoculated leaf disc was cultured in an incubator set to 22°C under 16-hour light irradiation/8-hour dark conditions and taken out thereof on 10 days after inoculation. Blotch areas were scored using the following index: 5 was given when the blotch areas were 2/3 or more of the leaf disc; 4 was given when the blotch areas were 1/2 or more and less than 2/3 of the leaf disc; 3 was given when the blotch areas were 1/3 or more and less than 1/2 of the leaf disc; 2 was given when the blotch areas were 1/6 or more and less than 1/3 of the leaf disc; 1 was given when the blotch areas were less than 1/6 of the leaf disc; and 0 was given when no blotch area was present. Evaluation was carried out at N = 3 at each of the concentrations, and an average value was calculated.

As a result, the score was 4.3 for the control (cyclic dipeptide concentration: 0 μM), whereas the score was cLF = 0, cPV = 0, and cPY = 1.3 at the cyclic dipeptide concentration of 4 μM, and cLF = 0.3, cPV = 0.7, and cPY = 2.0 at the cyclic dipeptide concentration of 0.4 μM. Figure 1 shows a photograph of each leaf disc on 10 days after inoculation.

These results demonstrated that cLF and cPV exert an antimicrobial effect on downy mildew fungus at a lower concentration than that of cPY previously reported to have an antimicrobial effect on downy mildew fungus.

<Example 2: Pot test>

Eighteen seedlings (pot cultivation) of grapevine (variety: Koshu) were provided and grown at 25°C under 16-hour light irradiation/8-hour dark conditions until five leaves emerged from the shoot apex. An aqueous cLF solution and cPV were provided at three types (40 μM, 4 μM, and 0.4 μM) and two types (147 μM and 14.7 μM), respectively, of concentrations, while tap water was used as a control. Each concentration of the aqueous cLF solution, the aqueous cPV solution or tap water (control) was provided in an amount of 10 ml, and 10 μl of Approach(TM) BI (MARUWA Biochemical Co., Ltd.) was added as a spreading agent to each solution. Each solution was misted to three seedlings and dried in air at 25°C for 4 hours. Then, a grapevine downy mildew fungus *Plasmopara viticola* (subcultures of a strain separated from the grapevine farm field of the University of Yamanashi) spore suspension ($1 \times 10^4$ spores/ml) provided beforehand was inoculated in an amount of 5 ml per seedling. The seedlings thus inoculated were covered with semitransparent plastic bags in order to keep humidity. The seedlings were placed at 25°C for 16 hours in the dark and then grown at 25°C for 10 days under 16-hour light irradiation/8-hour dark conditions. After 10 days, the number of blotches and blotch areas of the grapevine downy mildew fungus were measured. The blotch areas were scored using the following index: 5 was given when the blotch areas were 1/2 or more of the leaf; 4 was given when the blotch areas were 1/3 or more and less than 1/2 of the leaf; 3 was given when the blotch areas were 1/4 or more and less than 1/3 of the leaf; 2 was given when the blotch areas were 1/8 or more and less than 1/4 of the leaf; 1 was given when the blotch areas were less than 1/8 of the leaf; and 0 was given when no blotch area was present. Evaluation was carried out targeting three seedlings (targeting five leaves per seedling) each for cLF, cPV, and the control, and an average value per leaf was calculated.

As a result, the number of blotches per leaf was 24.9 for the control (tap water), whereas the number of blotches per leaf was 1.8 for the application of 40 μM cLF, 5.0 for the application of 4 μM cLF, 10.5 for the application of 0.4 μM cLF, 2.9 for the application of 147 μM cPV, and 3.1 for the application of 14.7 μM cPV.

The evaluation score of the blotch areas was 3.5 for the control (tap water), whereas the score was 0.7 for the application of 40 μM cLF, 1.2 for the application of 4 μM cLF, 1.7 for the application of 0.4 μM cLF, 0.8 for the application of 147 μM cPV, and 0.6 for the application of 14.7 μM cPV.

These results demonstrated that cLF and cPV also exert an antimicrobial effect on downy mildew fungus in a seedling pot test which is more similar to the situation of an actual farm field.

<Example 3: Potato Phytophthora disease; farm field test>

The seed potato planting of potato (variety: Dejima) was performed on March 27. Treatment sections were three rows of sections, each of which was 3.6 $m^2$ and involved 16 plants. Then, the plants were cultivated in a usual manner. The first spraying of a cyclic dipeptide was carried out on May 16 (initial stage of flowering). The spraying method was as follows: an aqueous cLF solution was provided at three types (100 μM, 40 μM, and 4 μM) of concentrations, while tap water was used as a control. 0.1% of Approach(TM) BI (MARUWA Biochemical Co., Ltd.) was added as a

spreading agent to each concentration of the aqueous cLF solution or tap water (control). Each solution was sprayed at a ratio of 220 L per 10 ares using a mister.

After the first spraying, spraying was carried out by the same procedures as above on May 23, June 3, Jun 12, and Jun 21. Since the spontaneous occurrence of Phytophthora disease was slow, a potato Phytophthora fungus *Phytophthora infestans* spore suspension was inoculated by misting in an amount of 4 ml per plant on June 16. The first appearance of the Phytophthora fungus was confirmed on June 21. The disease was investigated on July 2.

The degree of onset of the disease was indicated in an evaluation score on the basis of the criteria defined below.

0: No onset of the disease.
1: The onset of the disease was found in approximately 1/4 of the leaves.
2: The onset of the disease in almost 1/2 of the leaves and sometimes the firing of some leaves were confirmed.
3: The onset of the disease in most of leaves (approximately 3/4) and the firing of many leaves were confirmed.
4: The firing of most of leaves (3/4 or more) and sometimes the firing of stem parts were confirmed.

The ratio of a diseased leaf was calculated according to the following expression: The number of diseased plants / The number of investigated plants

Severity was calculated according to the following expression:

$$[0 \times (\text{The number of plants with a degree of onset of the disease being 0}) + 1 \times (\text{The number of plants with a degree of onset of the disease being 1}) + 2 \times (\text{The number of plants with a degree of onset of the disease being 2}) + 3 \times (\text{The number of plants with a degree of onset of the disease being 3}) + 4 \times (\text{The number of plants with a degree of onset of the disease being 4})] / (\text{Total number of investigated plants} \times 4) \times 100$$

A control value was calculated according to the following expression:

$$100 - (\text{Severity of the treated group} / \text{Severity of the control group}) \times 100$$

The results of the disease investigation are shown in the table below.

[Table 1]

| Treatment | | The number of investigated plants | Degree of onset of disease | | | | | Ratio of diseased leaf (%) | Severity | Control value |
|---|---|---|---|---|---|---|---|---|---|---|
| | | | 0 | 1 | 2 | 3 | 4 | | | |
| cLF 100μM | I | 16 | 13 | 3 | 0 | 0 | 0 | 18.8 | 4.7 | 39.7 |
| | II | 16 | 12 | 4 | 0 | 0 | 0 | 25 | 6.3 | |
| | III | 16 | 14 | 2 | 0 | 0 | 0 | 12.5 | 3.1 | |
| | Average | | | | | | | 18.8 | 4.7 | |
| cLF 40μM | I | 16 | 12 | 4 | 0 | 0 | 0 | 25 | 6.3 | 19.2 |
| | II | 16 | 10 | 6 | 0 | 0 | 0 | 37.5 | 9.4 | |
| | III | 16 | 14 | 2 | 0 | 0 | 0 | 12.5 | 3.1 | |
| | Average | | | | | | | 25 | 6.3 | |
| cLF 4μM | I | 16 | 13 | 3 | 0 | 0 | 0 | 18.8 | 4.7 | 6.4 |
| | II | 16 | 12 | 4 | 0 | 0 | 0 | 25 | 6.3 | |
| | III | 16 | 9 | 7 | 0 | 0 | 0 | 43.8 | 10.9 | |
| | Average | | | | | | | 29.2 | 7.3 | |

(continued)

| Treatment | | The number of investigated plants | Degree of onset of disease | | | | | Ratio of diseased leaf (%) | Severity | Control value |
|---|---|---|---|---|---|---|---|---|---|---|
| | | | 0 | 1 | 2 | 3 | 4 | | | |
| Control | I | 16 | 9 | 7 | 0 | 0 | 0 | 43.8 | 10.9 | |
| | II | 16 | 10 | 6 | 0 | 0 | 0 | 37.5 | 9.4 | |
| | III | 16 | 14 | 2 | 0 | 0 | 0 | 12.5 | 3.1 | |
| | Average | | | | | | | 31.3 | 7.8 | |

All publications, patents and patent applications cited herein are incorporated herein by reference in their entirety.

## Claims

1. A control agent for a plant disease caused by infection with a microbe belonging to *Oomycetes,* comprising one or more selected from cyclo(L-leucyl-L-phenylalanyl) and a salt thereof as an active ingredient.

2. The plant disease control agent according to claim 1, wherein the plant disease is downy mildew or Phytophthora disease.

3. The plant disease control agent according to claim 2, wherein the plant disease is grapevine downy mildew.

4. The plant disease control agent according to any one of claims 1 to 3, wherein the microbe is *Plasmopara viticola* or *Phytophthora infestans.*

5. A control agent for grapevine downy mildew, comprising one or more selected from cyclo(L-prolyl-L-valyl) and a salt thereof as an active ingredient.

6. A method for controlling a plant disease caused by infection with a microbe belonging to *Oomycetes,* comprising applying one or more selected from cyclo(L-leucyl-L-phenylalanyl) and a salt thereof to a plant.

7. A method for controlling grapevine downy mildew, comprising
   applying one or more selected from cyclo(L-prolyl-L-valyl) and a salt thereof to grapevine.

8. A plant cultivation method comprising:

   applying one or more selected from cyclo(L-leucyl-L-phenylalanyl) and a salt thereof to a plant; and
   glowing the plant after the application.

9. A grapevine cultivation method comprising:

   applying one or more selected from cyclo(L-prolyl-L-valyl) and a salt thereof to grapevine; and
   glowing the grapevine after the application.

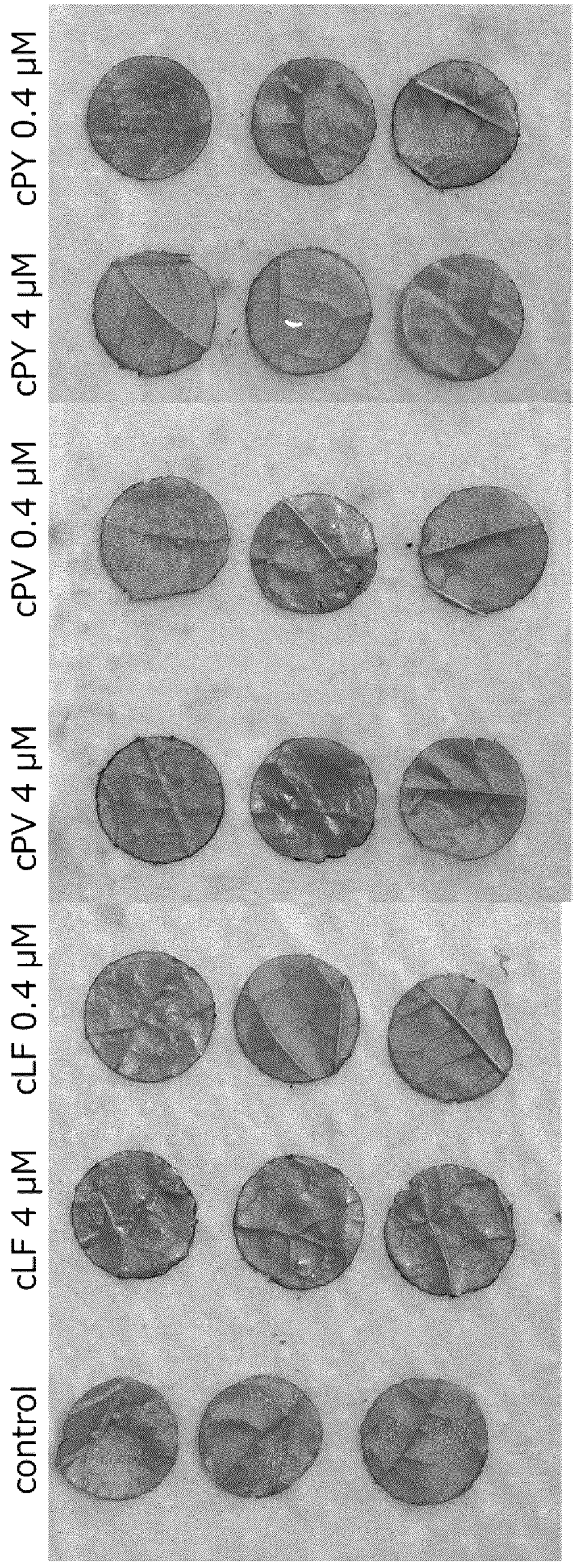


Fig. 1

**INTERNATIONAL SEARCH REPORT**

International application No.
PCT/JP2020/047167

A. CLASSIFICATION OF SUBJECT MATTER
A01N 43/60(2006.01)i; A01P 3/00(2006.01)i
FI: A01N43/60; A01N43/60 101; A01P3/00
According to International Patent Classification (IPC) or to both national classification and IPC

B. FIELDS SEARCHED

Minimum documentation searched (classification system followed by classification symbols)
A01N43/60; A01P3/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII); CAplus/REGISTRY (STN); Japio-GPG/FX

C. DOCUMENTS CONSIDERED TO BE RELEVANT

| Category* | Citation of document, with indication, where appropriate, of the relevant passages | Relevant to claim No. |
|---|---|---|
| X | JP 2013-531688 A (RURAL DEVELOPMENT ADMINISTRATION) 08 August 2013 (2013-08-08) claims, paragraphs [0007], [0012], 8th compound, paragraph [0013], 4th compound, compound no. 26, examples | 1-2, 4, 6, 8-9 |
| Y | claims, paragraphs [0007], [0012], 8th compound, paragraph [0013], 4th compound, compound no. 26, examples | 1-9 |
| Y | PUOPOLO, G. et al., "Lysobacter capsici AZ78 produces cyclo(L-Pro-L-Tyr), a 2,5-diketopiperazine with toxic activity against sporangia of Phytophthora infestans and Plasmopara viticola", Journal of Applied Microbiology, 2014, 117(4), pp. 1168-1180, DOI: 10.1111/jam.12611 abstract, column "Results", fig. 1-4 | 1-9 |
| Y | WO 2008/007251 A2 (UNIVERSITA DEGLI STUDI DI UDINE) 17 January 2008 (2008-01-17) claims, examples | 1-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 February 2021 (03.02.2021) | 16 February 2021 (16.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/047167

C (Continuation). DOCUMENTS CONSIDERED TO BE RELEVANT

| Category* | Citation of document, with indication, where appropriate, of the relevant passages | Relevant to claim No. |
|---|---|---|
| Y | KUMAR, S. N. et al., "Antifungal Activity of Diketopiperazines and Stilbenes Against Plant Pathogenic Fungi In Vitro", Applied Biochemistry and Biotechnology, 2014, 172(2), pp. 741-754, DOI: 10.1007/s12010-013-0567-6 abstract, column "Results", tables 2-4, fig. 1 | 1-9 |
| Y | SYED-AB-RAHMAN, S. F. et al., "Identification of Soil Bacterial Isolates Suppressing Different Phytophthora spp. and Promoting Plant Growth", Frontiers in Plant Science, 2018, 9, pp. 1-18, doi: 10.3389/fpls.2018.01502 abstract, fig. 10, columns "RESULT", "DISCUSSION" | 1-9 |
| A | PARK, S. Y. et al., "Characterization of metabolites from cultures of Cellulosimicrobium cellulans", Korean Society for Applied Biological Chemistry, 2014, 57(4), pp. 481-484, DOI: 10.1007/s13765-014-4118-9 entire text | 1-9 |

Form PCT/ISA/210 (continuation of second sheet) (January 2015)

**INTERNATIONAL SEARCH REPORT**
Information on patent family members

International application No.
PCT/JP2020/047167

| Patent Documents referred in the Report | Publication Date | Patent Family | Publication Date |
|---|---|---|---|
| JP 2013-531688 A | 08 Aug. 2013 | US 2013/0190177 A1<br>claims, paragraphs [0017]-[0021], [0059], [0065], compound no. 26, examples<br>US 2017/0204102 A1<br>WO 2012/008781 A2<br>EP 2594134 A2<br>KR 10-1278140 B1<br>CN 103118540 A<br>BR 112013000905 A | |
| WO 2008/007251 A2 | 17 Jan. 2008 | US 2009/0257984 A1<br>EP 2043442 A2<br>IT RM20060315 A<br>AU 2007273962 A<br>CN 101484010 A<br>ZA 200900304 B<br>IT RM20060315 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005289943 A
- JP 2013531688 A
- JP 5051397 A
- WO 2008007251 A
- JP 2019229588 A


### Non-patent literature cited in the description


- *PNAS,* 2011, vol. 108 (17), 7253-7258
- *Chem. Pharm. Bull.,* 2011, vol. 59 (1), 106-108
- *Journal of Applied Microbiology,* 2012, vol. 113, 914-924
- *Biosci. Biotechnol. Biochem.,* 2013, vol. 77 (7), 1449-1454
- *Chemistry of Heterocyclic compounds.,* 2014, vol. 50 (2), 290-295
- *Journal of Applied Microbiology,* 2014, vol. 117, 1168-1180
- *Annals of Biological Sciences,* 2017, vol. 5 (1), 47-53